# EUROPEAN PATENT SPECIFICATION

(11) **EP 2 233 899 B1**
(45) Date of publication and mention of the grant of the patent: **30.09.2015**
(21) Application number: 09004519.6
(22) Date of filing: 28.03.2009
(51) Int. Cl.: G01K 1/14, G01K 11/26

(54) **Temperature probe, temperature probing system and device for heating or cooling a substance, comprising such a temperature probing system**
Temperatursonde, Temperatursondiersystem und Vorrichtung zum Erwärmen oder Kühlen einer Substanz mit einem derartigen Temperatursondiersystem
Sonde de température, système de sonde de température et dispositif pour le chauffage ou le refroidissement d'une substance, comportant un tel système de sonde de température

(43) Date of publication of application: 29.09.2010
(73) Proprietor: Electrolux Home Products Corporation N.V., 1130 Brussels (BE)
(72) Inventor: Bertoni, Christina, 33080 Porcia (IT); Trombetta, Antonella, 34074 Monfalcone (IT)
(74) Representative: Baumgartl, Gerhard Willi

(56) References cited:
- DE-A1-102004 047 756
- US-A1- 2005 201 445
- US-A1- 2006 196 057
- US-A1- 2006 219 705

## Description

The present invention in particular relates to a temperature probe comprising a number of temperature sensors.

Such temperature probes are used with baking ovens, for example. Such temperature probes are known for example from US 2006/0219705 A1, US 2005/0201445 A1, DE 10 2004 047 756 A1 and US 2008/0043809 A1. The temperature probe known from US 2008/0043809 A1 for example comprises a tine with a number of temperature sensors arranged therein, wherein the sensors are of thermistor type. The temperature probe can at least partially be inserted in a substance, a piece of meat for example. Using a number of temperature sensors makes it possible to obtain temperature distributions or gradients prevailing within the substance during a baking or cooling process. Using such information, baking, cooling and the like can be monitored and controlled in an automated manner.

It is an object of the invention to provide an alternative temperature probe, particularly aiming at low production costs combined with satisfactory, at least moderate temperature probing accuracy, and more particularly suitable for wireless temperature probing. Further, it is an object to provide a temperature probing system and a device for heating or cooling a substance, comprising such a temperature probing system.

This object is solved by claims 1, 7 and 9. Embodiments of the invention result from dependent claims 2 to 6 and 8.

A first aspect of the invention is directed to a temperature probe. The temperature probe comprises at least two sensor having a pointed tip end for enhanced insertion into a substance such as a piece of meat for example.

Each sensor tine comprises a number of surface acoustic wave temperature sensors. For convenience, the term "surface acoustic wave temperature sensor" will be abbreviated by "temperature sensor". Note that additional tines carrying no temperature sensors may be provided. For example a triple tined temperature probe may be provided in which two tines comprise temperature sensors, i.e. those two tines constitute sensor tines. However, this shall not exclude embodiments comprising more than two sensor tines.

The sensor tines are designed to allocate multiple surface acoustic wave temperature sensors. The temperature sensors make it possible to implement a temperature probe for wirelessly probing temperature, temperature distributions and temperature gradients, respectively, within a substance. Wireless probing generally includes communication of sensor signals to respective communication circuits, such as receivers and transceivers, respectively. In choosing appropriate frequency bands it is possible to conduct at least one of simultaneous and selective interrogation of the temperature sensors.

Further, temperature probes according to the first aspect can be produced at low, at least moderate costs. In particular, low production costs can be achieved if temperature sensors are used that are operable in the Megahertz frequency range. This especially applies to frequency bands permitted for civil applications, as for example operating frequencies in the ISM (Industrial, Scientific and Medical band) frequency range, for example near the 434 MHz ISM band for use with industrial, scientific or medical devices. Such frequency ranges are particularly suitable for application in ovens, chillers and the like. As compared to surface acoustic wave temperature sensors operable at higher frequency ranges in the Gigahertz regime for example, operation frequencies in the Megahertz frequency range allow for a reduction in production costs not only with respect to temperature sensors, but also with respect to communication circuits, processing electronics and the like.

The inventors have realized, that the application of temperature sensors operating in the Megahertz regime can be successfully implemented despite conflicting issues like reflection at metal objects, such as side walls of a baking muffle or baking trays located within a baking muffle and the like, Electro Magnetic Compatibility (EMC), interrogation of the temperature sensors, amongst others depending on sensor design and sensor to communication circuit distances.

In a compact and easy to handle embodiment, the at least two sensor tines are fixedly interconnected at respective tine ends. Such interconnection may for example be established by using a bridging spacer. The spacer may comprise or be designated for attaching a handle. Such a handle facilitates handling of the temperature probe, in particular insertion of the temperature probe into a rigid or solid substance, such as a piece of meat and the like. In the present embodiment, the sensor tines are arranged side by side to each other in parallel orientation. The spacing between the sensor tines may be selected according to respective needs and application requirements. The spacing may inter alia be selected in dependence on intended purpose, overall size of the temperature probe, tine length, type and overall size of the substance to be temperature probed and operation frequency of the temperature sensors. A fixed distance between the tines and a parallel side by side arrangement as well may be advantageous for accurately determining temperature distributions and gradients. With such an arrangement relative positions of the temperature sensors, in particular pairwise distances between temperature sensors, are generally readily available. Such information may be beneficial for determining temperature gradients and distributions. Apart from this, the proposed tine arrangement makes it possible to easily insert the multiple tined temperature probe in any substance may it be solid, fluid or pourable.

The temperature probe may further comprise an antenna, preferably of passive type, for wireless communication. The antenna can for example be positioned in a handle of the temperature probe or in any other suitable case or casing. The antenna preferably is electrically connected to the SAW sensors, most preferably in such a way that during operation of the temperature probe, the antenna will be located outside the substance to be temperature probed.

The temperature sensors in claim 1 are arranged in an array, which is a very easy and cost efficient way of arranging the temperature sensors with a sensor tine. Preferably the array is of linear type. As temperature sensors of surface acoustic wave type operating in the Megahertz frequency range are comparatively large as compared to thermistors, thermocouples or surface acoustic wave temperature sensors operating in the Gigahertz frequency range thermal cross talk may be an issue. One option would be to provide thermal insulation between adjacent temperature sensors. This option - which shall not be excluded - however would increase the overall costs of the temperature probe. Further, the inventors have recognized that insulation materials arranged between adjacent temperature sensors will not fully exclude thermal cross talk. Therefore, claim 1 proposes to position the temperature sensors of different tines at alternating locations. By doing so, the average distance between adjacent temperature sensors of a single tine and of neighbouring tines as well can be enlarged, thereby reducing detrimental thermal cross talk. Reduced thermal cross talk will improve temperature probing accuracy.

Positioning the temperature sensors at alternating locations implies that the temperature sensors are arranged at distinct positions with regard to the lengthwise direction of the sensor tines. Further, arranging temperature sensors at alternate locations while increasing the average distance between adjacent temperature sensors at the same time may result in reduced overall costs of the temperature probe, as the total number of temperature sensors can be reduced.

The geometry of the temperature probe, particularly the length of the tines, may be selected according to respective needs. Especially in the field of monitoring inner temperatures of a substance within a muffle of a baking oven, or a refrigerating device, for example, it has turned out advantageous to use tines of about 150 millimeters in length. Moreover, such dimensions are considered to be advantageous for easy handling the temperature probe with the afore-mentioned purposes. However, the length may be adapted to respective application requirements.

In order to provide tines that are sufficiently stable in a mechanical point of view and in order to protect the temperature sensors from outer, in particular detrimental, effects, it is of advantage if at least the sensor tines further comprise a tubelike metal sheathing. The tubelike sheathing inter alia provides a kind of housing for accommodating the temperature sensors therein. Note that other materials than metals can be considered. However, from the viewpoint of low production costs, metal sheathings may be advantageous. Metal sheathings can be produced by conventional techniques at low costs, for example. Further, it is often desirable to provide easy to clean temperature probes. With respect to the intended use, it is generally advantageous to provide temperature probes that are resistant to a multitude of substances, abrasion-resistant and harmless when used in connection with foodstuff. Here it can be thought of a metal sheathing made from stainless steel.

As can be seen from the foregoing explanations, the object of the invention can be achieved with a temperature probe according to the first aspect of the invention.

A second aspect of the invention is directed to a temperature probing system. The term "temperature probing system" denotes a system able to probe at least one of temperature, temperature distribution and temperature gradient of or within a substance. The temperature probing system may be of stand-alone type, but may also be implemented in any device, particularly but not restricted to temperature treatment devices like ovens, in particular baking ovens, chillers and refrigerators.

The temperature probing system according to the second aspect comprises at least one temperature probe according to the first aspect of the invention. Further, a communication circuit, of receiver or transceiver type for example, is provided. The communication circuit which may in general be an electronic component is designed for communication with the temperature sensors. Communication may be of unidirectional or bidirectional signal transmission type.

In order to ease usability for a wide range of applications, it is of particular advantage if communication is of wireless type'. Here, the temperature probe may be placed distant from the communication circuit, for example in a muffle of a baking oven or a cooling chamber of a refrigerator. The respective electronic circuitry may be located just outside the muffle or cooling chamber, protected against high or low temperatures and other impacts such as steam, moisture and the like. A transceiver antenna, for example, may be located inside the oven or chiller.

Temperature probing may be eased and enhanced, if the communication is of selective type. This means that the communication circuit can selectively communicate with, in particular interrogate, each single temperature sensor. Such communication may be conducted simultaneously or consecutively.

As already mentioned, the communication may be unidirectional or bidirectional..Communication at least comprises receiving signals measured or generated by at least one of the temperature sensors. As multiple temperature sensors are used, the signals are generally representative of temperature values prevailing at or in a vicinity of the respective temperature sensor.

Since surface acoustic wave temperature sensors operating in the Megahertz frequency range are comparatively large-sized, the temperature values in this case represent mean or integral values rather than point values. The inventors, however, have recognized that such temperature values are appropriate to determine temperature distributions or temperature gradients if adequate distances between the temperature sensors are used. Here it is advantageous if the temperature sensors of different sensor tines are positioned at alternate locations. In this way, the number of sensors can be minimized and in particular complementary temperature distributions, gradients and profiles, respectively, can be obtained by using signals of temperature sensors placed within sensor tines. Further, thermal crosstalk problems resulting from thermal conduction along the tines and conflicting accurate temperature probing can at least be reduced. Using suitable data processing techniques, a unique temperature distribution etc. can be calculated by taking into account the distance between the sensor tines, by using supplementary temperature distributions etc.

For data processing, the temperature probing system may further comprise a data processing unit designed for generating secondary signals from primary signals received from the temperature sensors. In general, the secondary signals can comprise at least one of temperature values corresponding or assigned to respective temperature sensors, temperature gradients, in particular temperature gradients, corresponding to a plurality of temperature sensors, control signals intended for controlling temperature treatment processes, such as heating or cooling. The control signals may be used by a control unit designed for automatically operating a respective heating or cooling device. The secondary signals may be used for other purposes, for example for displaying temperature distributions, temperature gradients, temporal temperature gradients, warning signals and so on.

For further advantages and advantageous effects reference is made to details given in connection with the first aspect of the invention.

A third aspect of the invention is directed to a device or a system for heating or cooling a substance. Such a device may be selected from the group but not restricted to ovens, in particular baking ovens, refrigerators, chillers, chill rooms, chilling chambers, for household and industrial application respectively.

The device according to the third aspect comprises a temperature probing system according to the second aspect of the invention. This implies that the device comprises at least one temperature probe according to the first aspect of the invention. Advantages and advantageous effects of the device according to the third aspect of the invention immediately become obvious from the details given in connection with the first and second aspect of the invention.

Embodiments of the invention will now be described in connection with the accompanying figures, in which
- Fig. 1: shows a temperature probe according to the first aspect of the invention; and
- Fig. 2: shows a muffle of a baking oven representing a device according to the third aspect of the invention.

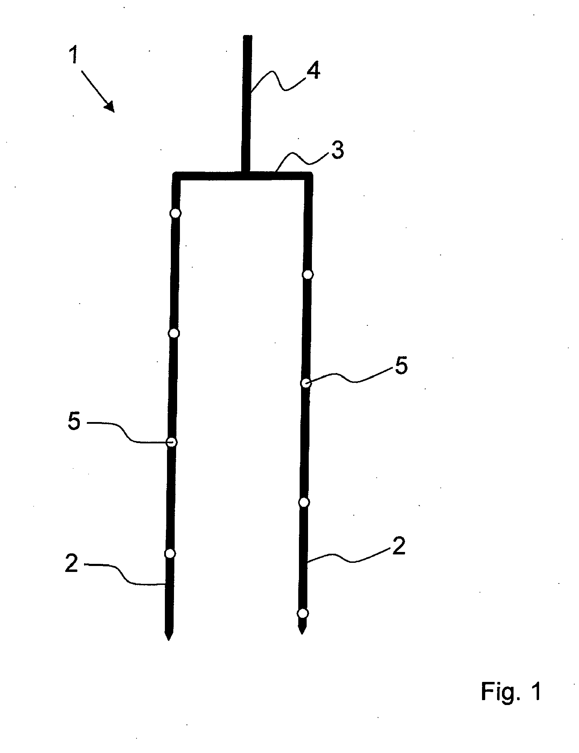

Fig. 1 shows a temperature probe 1 according to the first aspect of the invention. The temperature probe 1 comprises two sensor tines 2.

The sensor tines 2 are fixedly interconnected via a bridging spacer 3. About midway between the sensor tines 2 an extension 4 is provided with the spacer 3. The extension 4 may be used as a handle or be designated for attaching a handle. The sensor tines 2 are arranged side by side in parallel orientation. Tine ends facing away from the spacer 3 are formed as pointed tip ends easing insertion of the sensor tines 2 into a substance, such as a piece of meat.

Each sensor tine 2 has a tubelike metal sheathing which is made from stainless steel. Note that other materials than stainless steel, in particular metals or ceramics, are conceivable depending on application requirements. Stainless steel has the advantage of providing low-cost, easy to clean and resistant surfaces. Moreover, stainless steel provides adequate heat conduction properties with respect to the temperature range characterizing the application in ovens or chillers.

The sheathing, comparable to that of a hollow cylinder, provides a tubelike cavity. The cavity is adapted to accommodate therein temperature sensors. The present invention makes use of surface acoustic wave temperature sensors which are denoted by reference sign 5 in Fig. 1.

With the embodiment shown in Fig. 1 each sensor tine 2 comprises four surface acoustic wave temperature sensors 5 arranged in a row within each sensor tine 2. However, the number of sensors per tine can be decreased or increased depending on tine length, sensor characteristics, cross-talk issues etc.. The surface acoustic wave temperature sensors 5 are operable in the Megahertz frequency ISM band. Compared to surface acoustic wave temperature sensors operating in the Gigahertz frequency ISM range the surface acoustic wave sensors 5 proposed by the invention are comparatively large-sized. However, surface acoustic wave temperature sensors 5 operating in the MHz ISM band are comparatively cheap. Therefore, the overall cost of a temperature probe 1 according to the invention can be kept at a comparatively low level. However, depending on application requirements, the frequency of operation can be varied from MHz to GHz.

Consequently, the cross section of the temperature probe 1 sheathing has to be adapted according to the actual sensor size. This may cause enhanced thermal cross talk along the sensor tines 2. Such cross talk may be reduced by providing insulating materials between adjacent temperature sensors or by increasing the distance between adjacent sensors positioned inside the tine. But additional insulation will lead to increased overall costs; while increased sensor distances will lead to longer tines, compromising the mechanical robustness of the tines.

In order to handle the issue of thermal cross talk while assuring satisfactory temperature probing, the surface acoustic wave temperature sensors 5 are positioned at alternating locations, as can be seen from Fig. 1. In Fig. 1, the array of surface acoustic wave temperature sensors 5 of the left-hand sensor tine 2 is shifted by about half the distance between the surface acoustic wave temperature sensors 5 of the right-hand sensor tine 5. Thereby it is possible to obtain supplementary or complementary temperature profiles. The temperature profiles can be combined using suitable data processing techniques to generate an overall temperature gradient, temperature distribution and the like. The overall temperature gradient and the like can be used to evaluate the progress or time course of heating or cooling a substance. Such evaluation may be used to automatically conduct heating of cooling according to respective needs.

As can be seen, the proposed temperature probe 1 provides a cost efficient and accurate solution for temperature probing of substances, such as foodstuff.

The above-identified alternate arrangement of surface acoustic wave temperature sensors 5 is not mandatory. Any other arrangement suitable for obtaining complementary or supplementary temperature profiles can be considered within the scope of the invention.

The temperature probe 1 shown in Fig. 1 is suitable for a great variety of purposes. It can be used with heating or cooling devices for heating or cooling substances. In particular the temperature probe 1 can be used with ovens, refrigerators, chillers and the like, for household and industrial application as well.

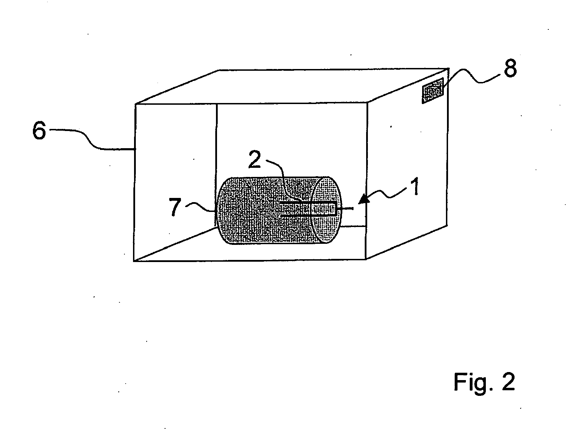

Fig. 2 exemplarily shows a muffle 6 of a baking oven. A piece of meat 7 intended for baking or roasting is inserted into the muffle 6. The temperature probe 1 as shown and described with reference to Fig. 1 is applied to the piece of meat 7, wherein the sensor tines 2 are placed approximately symmetrical to the center of the piece of meat 7. The sensor tines 2 in this case are about 150 millimeters in length. Note that the dimension of the temperature probe 1 and the sensor tines 2 can varied according to respective requirements.

The oven further comprises a communication circuit 8 and antennas for wireless and selective communication with the surface acoustic wave sensors 5 which are not visible in Fig. 2. Selective communication means that each single surface acoustic wave temperature sensor 5 can be interrogated separately. The communication circuit is designed such that disturbances resulting from muffle walls and other objects made from metal can at least greatly be reduced or neglected.

The surface acoustic wave temperature sensors 5 generate primary signals representative of temperature values or integral temperature values prevailing at respective locations or sections. The primary signals are transmitted via wireless communication to the communication circuit 8. Using the primary signals, a data processing unit (not shown), which may be integral part of the communication circuit 8, calculates secondary signals. The secondary signals in this case are representative of temperature gradients prevailing within the piece of meat 7 during baking.

The temperature gradients can be used to generate control signals for automatically controlling the whole baking process. In particular, the control signals can be used to automatically control a heating element of the oven.

As can be seen, the temperature probe 1 provides a comparatively cheap, robust and reliable solution for temperature probing. Obviously, the temperature probe 1 is not only suitable for ovens and can be used in connection with a variety of other devices for heating or cooling substances.

In all, it becomes clear that the objects of the invention are solved by the invention.

### List of reference signs

- 1: temperature probe
- 2: sensor tine
- 3: bridging spacer
- 4: extension
- 5: surface acoustic wave temperature sensor
- 6: muffle
- 7: piece of meat
- 8: communication circuit

## Claims

1. Temperature probe (1) comprising at least two sensor tines (2), each sensor tine (2) comprising multiple surface acoustic wave temperature sensors (5), wherein
the at least two sensor tines (2) being fixedly interconnected at respective tine ends and arranged side by side to each other in parallel orientation, and wherein,
with regard to the lengthwise direction of the sensor tines (2),
- the surface acoustic wave temperature sensors (5) of each sensor tine (2) are arranged in an array, and
- the surface acoustic wave temperature sensors (5) of different sensor tines (2) are positioned at alternating locations.

2. Temperature probe (1) according to claim 1, the surface acoustic wave temperature sensors (5) being adapted to be operable in the Megahertz frequency range.

3. Temperature probe (1) according to at least one of claims 1 or 2, further comprising an antenna, preferably of passive type, for wireless communication, the antenna preferably being positioned in a handle of the temperature probe.

4. Temperature probe (1) according to claim (3), wherein each array is of linear type.

5. Temperature probe (1) according to at least one of claims 1 to 4, the sensor tines (2) having a length of about 150 millimeters.

6. Temperature probe (1) according to at least one of claims 1 to 5, each sensor tine (2) further comprising a tubelike metal sheathing, preferably made from stainless steel.

7. Temperature probing system comprising at least one temperature probe (1) according to at least one of claims 1 to 6, a communication circuit (8) designed for, preferably wireless, preferably selective, communication with the surface acoustic wave temperature sensors (5), communication at least comprising receiving signals measured by at least one of the surface acoustic wave temperature sensors (5).

8. Temperature probing system according to claim 7, further comprising a data processing unit designed for generating secondary signals from primary signals of the surface acoustic wave temperature sensors (5), the secondary signals comprising at least one of temperature values corresponding to respective surface acoustic wave temperature sensors, temperature distributions, in particular temperature gradients, corresponding to a plurality of surface acoustic wave temperature sensors, control signals intended for controlling temperature treatment processes, in particular heating or cooling.

9. Device for heating or cooling a substance, comprising a temperature probing system according to at least one of claims 7 and 8, the device preferably being selected from the group comprising ovens, heaters, refrigerators, chillers, designed for industrial and household application respectively.

## Patentansprüche

1. Temperatursonde (1), die mindestens zwei Sensorzinken (2) umfasst, wobei jede Sensorzinke (2) mehrere Akustooberflächenwellen-Temperatursensoren (5) umfasst, wobei die mindestens zwei Sensorzinken (2) an jeweiligen Zinkenenden fest verbunden und Seite-an-Seite in paralleler Ausrichtung zueinander angeordnet sind, und wobei,
im Hinblick auf die längenmäßige Richtung der Sensorzinken (2),
- die Akustooberflächenwellen-Temperatursensoren (5) jeder Sensorzinke (2) in einer Gruppierung angeordnet sind, und
- die Akustooberflächenwellen-Temperatursensoren (5) verschiedener Sensorzinken (2) an alternierenden Orten positioniert sind.

2. Temperatursonde (1) nach Anspruch 1, wobei die Akustooberflächenwellen-Temperatursensoren (5) dafür ausgelegt sind, im Megahertz-Frequenzbereich betrieben zu werden.

3. Temperatursonde (1) nach mindestens einem der Ansprüche 1 oder 2, die ferner eine Antenne, vorzugsweise passiven Typs, für drahtlose Kommunikation umfasst, wobei die Antenne vorzugsweise in einem Handgriff der Temperatursonde positioniert ist.

4. Temperatursonde (1) nach Anspruch 3, wobei jede Matrix vom linearen Typ ist.

5. Temperatursonde (1) nach mindestens einem der Ansprüche 1 bis 4, wobei die Sensorzinken (2) eine Länge von etwa 150 Millimetern aufweisen.

6. Temperatursonde (1) nach mindestens einem der Ansprüche 1 bis 5, wobei jede Sensorzinke (2) ferner eine röhrenartige Metallhülse umfasst, die vorzugsweise aus Edelstahl besteht.

7. Temperatursondensystem, das mindestens eine Temperatursonde (1) nach mindestens einem der Ansprüche 1 bis 6, eine Kommunikationsschaltung (8), die für vorzugsweise drahtlose, vorzugsweise selektive Kommunikation mit den Akustooberflächenwellen-Temperatursensoren (5) ausgelegt ist, umfasst, wobei die Kommunikation mindestens das Empfangen von Signalen umfasst, die von mindestens einem der Akustooberflächenwellen-Temperatursensoren (5) gemessen wurden.

8. Temperatursondensystem nach Anspruch 7, das ferner eine Datenverarbeitungseinheit umfasst, die zum Erzeugen sekundärer Signale aus primären Signalen der Akustooberflächenwellen-Temperatursensoren (5) ausgelegt ist, wobei die sekundären Signale wenigstens eines von Temperaturwerten, die jeweils Akustooberflächenwellen-Temperatursensoren entsprechen, Temperaturverteilungen, insbesondere Temperaturgradienten, die einer Mehrzahl von Akustooberflächenwellen-Temperatursensoren entsprechen, Steuersignalen, die zum Steuern von Temperaturbehandlungsprozessen, insbesondere Heizen oder Kühlen, gedacht sind, umfassen.

9. Vorrichtung zum Heizen oder Kühlen einer Substanz, die ein Temperatursondensystem nach mindestens einem der Ansprüche 7 und 8 umfasst, wobei die Vorrichtung vorzugsweise aus der Gruppe, die Öfen, Heizer, Kühlschränke, Kühler, die jeweils für Industrie- und Haushaltsanwendungen ausgelegt sind, umfasst, ausgewählt wird.

## Revendications

1. Sonde (1) de température comportant au moins deux dents (2) à capteurs, chaque dent (2) à capteurs comportant des capteurs multiples (5) de température à ondes acoustiques de surface,
lesdites au moins deux dents (2) à capteurs étant connectées de manière fixe à des extrémités respectives de dents et disposées côte à côte dans une orientation parallèle, et
par rapport à la direction longitudinale des dents (2) à capteurs,
- les capteurs (5) de température à ondes acoustiques de surface de chaque dent (2) à capteurs étant disposés en un réseau, et
- les capteurs (5) de température à ondes acoustiques de surface de dents (2) à capteurs différentes étant positionnés à des emplacements alternés.

2. Sonde (1) de température selon la revendication 1, les capteurs (5) de température à ondes acoustiques de surface étant prévus pour pouvoir être utilisés dans la gamme de fréquence de l'ordre du mégahertz.

3. Sonde (1) de température selon au moins une des revendications 1 ou 2, comportant en outre une antenne, de préférence du type passif, destinée à une communication sans fil, l'antenne étant de préférence positionnée dans un manche de la sonde de température.

4. Sonde (1) de température selon la revendication (3), chaque réseau étant de type linéaire.

5. Sonde (1) de température selon au moins une des revendications 1 à 4, les dents (2) à capteurs présentant une longueur d'environ 150 millimètres.

6. Sonde (1) de température selon au moins une des revendications 1 à 5, chaque dent (2) à capteurs comportant en outre une gaine tubulaire en métal, de préférence constituée d'acier inoxydable.

7. Système de sondage de température comportant au moins une sonde (1) de température selon au moins une des revendications 1 à 6, un circuit (8) de communication conçu pour une communication, de préférence sans fil, de préférence sélective, avec les capteurs (5) de température à ondes acoustiques de surface, la communication comportant au moins la recepions de signaux mesurés par au moins un des capteurs (5) de température à ondes acoustiques de surface.

8. Système de sondage de température selon la revendication 7, comportant en outre une unité de traitement de données conçue pour générer des signaux secondaires à partir de signaux primaires des capteurs (5) de température à ondes acoustiques de surface, les signaux secondaires comportant au moins une information parmi des valeurs de température correspondant à des capteurs respectifs de température à ondes acoustiques de surface, des répartitions de température, en particulier des gradients de température, correspondant à une pluralité de capteurs de température à ondes acoustiques de surface, des signaux de commande destinés à commander des processus de traitement de température, en particulier de chauffage ou de refroidissement.

9. Dispositif pour chauffer ou refroidir une substance, comportant un système de sondage de température selon au moins une des revendications 7 et 8, le dispositif étant de préférence choisi dans le groupe comportant des fours, des appareils de chauffage, des réfrigérateurs, des refroidisseurs, conçus respectivement pour une application industrielle et domestique.
